# EUROPEAN PATENT SPECIFICATION

(11) **EP 2 037 299 B1**
(45) Date of publication and mention of the grant of the patent: **28.03.2012**
(21) Application number: 07745015.3
(22) Date of filing: 11.06.2007
(51) Int. Cl.: G02B 5/30, B32B 7/02, B32B 27/00, C09J 7/02, C09J 133/00, G02F 1/1335, G02F 1/13363

(54) **ADHESIVE OPTICAL FILM AND IMAGE DISPLAY DEVICE**
KLEBENDER OPTISCHER FILM UND BILDANZEIGEEINRICHTUNG
FILM OPTIQUE ADHÉSIF ET DISPOSITIF D'AFFICHAGE D'IMAGE

(30) Priority: 28.06.2006 JP 2006178456; 07.06.2007 JP 2007151628
(43) Date of publication of application: 18.03.2009
(73) Proprietor: Nitto Denko Corporation, Ibaraki-shi, Osaka 567-8680 (JP)
(72) Inventor: TOYAMA, Yuusuke, Ibaraki-shi, Osaka 567-8680 (JP); SATAKE, Masayuki, Ibaraki-shi, Osaka 567-8680 (JP); NIINO, Teppei, Ibaraki-shi, Osaka 567-8680 (JP)
(74) Representative: Grünecker, Kinkeldey, Stockmair & Schwanhäusser
(86) International application number: PCT/JP2007/061725
(87) International publication number: WO 2008/001601

(56) References cited:
- JP-A- 09 281 336
- JP-A- 2001 350 018

## Description

### TECHNICAL FIELD

The present invention relates to a pressure-sensitive adhesive optical film in which a pressure-sensitive adhesive layer is laminated on at least one side of an optical film. The present invention also relates to an image displays such as liquid crystal displays, organic electroluminescence displays and plasma display panels, using the pressure-sensitive adhesive optical film. The optical film may be a polarizing plate, a retardation plate, an optical compensation film, a brightness enhancement film, or any laminate thereof.

### BACKGROUND ART

A liquid crystal display indispensably requires polarizing elements disposed on both sides of a liquid crystal cell because of an image forming method adopted therein and generally polarizing plates in which a transparent protective film is laminated on one side or both sides of a polarizer are adhered. Besides, on a liquid crystal panel, various kinds of optical elements have been used in addition to a polarizing plate in order to improve a display quality of a display. For example, there have been used a retardation plate for coloration prevention, a viewing angle increasing film for improving a viewing angle of a liquid crystal display and a brightness enhancement film for raising a contrast of a display. The films each are collectively referred to an optical film.

A pressure-sensitive adhesive is usually employed in adhering an optical film described above to a liquid crystal cell. An optical film and a liquid crystal cell or optical films are usually adhered to each other using a pressure-sensitive adhesive therebetween in order to reduce a light loss. In such cases, a pressure-sensitive adhesive optical film in which a pressure-sensitive adhesive is provided in advance on one surface of an optical film as a pressure-sensitive adhesive layer is generally used because of a merit such as that no necessity arises for a drying step of fix the optical film.

Triacetylcellulose films have been preferably used as transparent protective films for the polarizing plate. However, triacetylcellulose does not have sufficient resistance to moisture or heat, and polarizing plates including a triacetylcellulose film as a transparent protective film have the drawback that their performance such as polarization degree and hue are reduced, when they are used at high temperature or high humidity. In addition, light obliquely incident on triacetylcellulose films can cause certain retardation. Such retardation can significantly affect the viewing angle characteristics of liquid crystal displays, as they are getting larger in recent years. To solve the problem described above, it is proposed that cyclic olefin resin should be used in place of triacetylcellulose as a material for transparent protective films. Cyclic olefin resin has low moisture permeability and almost no retardation in oblique directions.

However, because cyclic olefin resin has low moisture permeability, a pressure-sensitive adhesive optical film serving as a polarizing plate and having a transparent protective film made of cyclic olefin resin has a problem in which it can cause foaming in an endurance test where it is allowed to stand in a high-temperature environment while bonded to a glass substrate. Such a foaming problem does not occur when triacetylcellulose is used as a material for transparent protective films.

For example, a method proposed to control the problem of foaming in the pressure-sensitive adhesive optical film includes using a pressure-sensitive adhesive layer having a saturated water absorption ratio of 0.60% by weight or less and an adhesive strength of 600 g/20 mm or less at a peel angle of 90° to the adherend (see Patent Literature 1). Patent Literature 1 discloses that if the saturated water absorption ratio is controlled to a low level, foaming can be suppressed. However, when cyclic olefin resin with low moisture permeability is used as a material for a transparent protective film of a polarizing plate, foaming cannot be suppressed simply by a reduction in the saturated water absorption ratio.

Patent Literature 1: JP-A No. 09-281336

### DISCLOSURE OF THE INVENTION

### PROBLEMS TO BE SOLVED BY THE INVENTION

An object of the invention is to provide a pressure-sensitive adhesive optical film that includes an optical film and a pressure-sensitive adhesive layer placed on at least one side of the optical film and can have high durability in high-temperature environments and be prevented from foaming in such environments, even when the optical film on which the pressure-sensitive adhesive layer is placed is made of a material with low moisture permeability.

Another object of the invention is also to provide an image display using such a pressure-sensitive adhesive optical film.

### MEANS FOR SOLVING THE PROBLEMS

As a result of intensive investigations for solving the above problems, the inventors have found that the objects can be achieved with the pressure-sensitive adhesive optical film described below and thus have completed the present invention.

The present invention relates to a pressure-sensitive adhesive optical film, comprising:
an optical film; and
a pressure-sensitive adhesive layer placed on at least one side of the optical film, wherein
the pressure-sensitive adhesive layer has an equilibrium moisture content ratio (a) of 0.5% by weight or less,
the pressure-sensitive adhesive layer shows a displacement amount (b) of 600 µm or less in one hour at 23°C, when a tensile shearing stress of 500 gf is applied to an adhesion area of 10 mm x 10 mm having a thickness of 25 µm, and
the equilibrium moisture content ratio (a) and the displacement amount (b) satisfy the relation: b< 1036.4 x e^{-5.124a}.

In the pressure-sensitive adhesive optical film, the equilibrium moisture content ratio (a) is preferably 0.02% by weight or more, and the displacement amount (b) is preferably 20 µm or more.

As described above, the equilibrium moisture content ratio (a) and the displace amount (b) with respect to the creep properties are regulated in the pressure-sensitive adhesive layer according to the invention. The regulation of the equilibrium moisture content ratio (a) and the displacement amount (b) allows an improvement in durability in high-temperature environments and also allows suppression of foaming in such environments, even when the optical film on which the pressure-sensitive adhesive layer is placed is made of a material with low moisture permeability.

The pressure-sensitive adhesive layer has an equilibrium moisture content ratio (a) of 0.5% by weight or less. The equilibrium moisture content ratio (a) refers to the content of water finally remaining in the pressure-sensitive adhesive layer. As the content of the finally remaining water becomes lower, foaming can be more effectively suppressed. When the equilibrium moisture content ratio (a) is more than 0.5% by weight, foaming cannot be sufficiently suppressed in an endurance test, even though the displacement amount (b) is controlled to be small. The displacement amount (b) with respect to creep properties is 600 µm or less. When the displacement amount (b) is more than 600 µm, foaming cannot be sufficiently suppressed in an endurance test, even though the equilibrium moisture content ratio (a) is controlled to be low. According to the invention, the pressure-sensitive adhesive layer is regulated so that the equilibrium moisture content ratio (a) and the displacement amount (b) each fall within the above range and satisfy the relation b< 1036.4 x e^{-5.124a}.
While the equilibrium moisture content ratio (a) and the displacement amount (b) are each preferably controlled to be small, the control to satisfy the relation allows suppression of foaming in an endurance test.

In order to suppress foaming, the equilibrium moisture content ratio (a) and the displacement amount (b) are ideally 0% by weight and 0 µm, respectively. However, the equilibrium moisture content ratio (a) is preferably 0.02% by weight or more, more preferably 0.03% by weight or more, in order to prevent defects due to a reduction in adhesive strength (pressure-sensitive adhesive strength).
In general, the displacement amount (b) is preferably 20 µm or more. If the displacement amount (b) is too small, the optical film could undesirably separate from a liquid crystal panel in an endurance test such as a heat or moisture resistance test, even though foaming can be suppressed as desired. From this point of view, the displacement amount (b) is preferably 30 µm or more, more preferably 40 µm or more.

In the pressure-sensitive adhesive optical film, the pressure-sensitive adhesive layer preferably shows a displacement amount (b) of 600 µm or less when having an equilibrium moisture content ratio (a) of 0.15% by weight or less. Particularly when the equilibrium moisture content ratio (a) is 0.15% by weight or less, the displacement amount (b) is preferably 540 µm or less, more preferably 300 µm or less, even more preferably 140 µm or less, still more preferably less than 75 µm. In these ranges, the equilibrium moisture content ratio (a) is preferably 0.13% by weight or less, more preferably 0.12% by weight or less, even more preferably 0.11% by weight or less.

In the pressure-sensitive adhesive optical film, the pressure-sensitive adhesive layer preferably shows a displacement amount (b) of 350 µm or less when having an equilibrium moisture content ratio (a) of more than 0.15% by weight to 0.25% by weight Particularly when the equilibrium moisture content ratio (a) is more than 0.15% by weight to 0.25% by weight, the displacement amount (b) is preferably 240 µm or less, more preferably 130 µm or less, even more preferably less than 75 µm. In these ranges, the equilibrium moisture content ratio (a) is preferably 0.23% by weight or less, more preferably 0.22% by weight or less, even more preferably 0.21 % by weight or less.

In the pressure-sensitive adhesive optical film, the pressure-sensitive adhesive layer preferably shows a displacement amount (b) of 150 µm or less when having an equilibrium moisture content ratio (a) of more than 0.25% by weight to 0.5% by weight. Particularly when the equilibrium moisture content ratio (a) is more than 0.25% by weight to 0.5% by weight, the displacement amount (b) is preferably 100 µm or less, more preferably less than 75 µm. In these ranges, the equilibrium moisture content ratio (a) is preferably 0.45% by weight or less, more preferably 0.43% by weight or less.

In the pressure-sensitive adhesive optical film, when the pressure-sensitive adhesive layer has an equilibrium moisture content ratio (a) of from 0.05% by weight to 0.25% by weight, the equilibrium moisture content ratio (a) and the displacement amount (b) preferably satisfy the relation: b≤-541.67a+209.58. Particularly in order to suppress foaming in an endurance test, the relationship described above is preferably satisfied. In particular, the relational expression is preferably satisfied when the equilibrium moisture content ratio (a) is in the range of 0.07 to 0.22% by weight.

In the pressure-sensitive adhesive optical film, it is preferable that the optical film on which the pressure-sensitive adhesive layer is placed has a water-vapor permeability of 1000 g/m² per 24 hours or less at 80°C and 90%R.H. The invention is effectively applied to suppress foaming in an endurance test, when such a material with low moisture permeability is used.

In a preferred embodiment, the pressure-sensitive adhesive optical film is a polarizing plate including a polarizer and a transparent protective film placed on at least one side of the polarizer. In particular, the transparent protective film placed on at least one side preferably has a water-vapor permeability of 1000 g/m² per 24 hours or less at 80°C and 90%R.H., and the pressure-sensitive adhesive layer is preferably placed on the transparent protective film.

In the pressure-sensitive adhesive optical film, the pressure-sensitive adhesive layer is preferably formed from a pressure-sensitive adhesive comprising an acrylic polymer and a crosslinking agent.

The present invention also relates to an image display, comprising at least one piece of the pressure-sensitive adhesive optical film. The pressure-sensitive adhesive optical film of the present invention is used as a piece or combined pieces depend on the various types on the image display such as liquid crystal displays or the like.

### BRIEF DESCRIPTION OF THE DRAWING

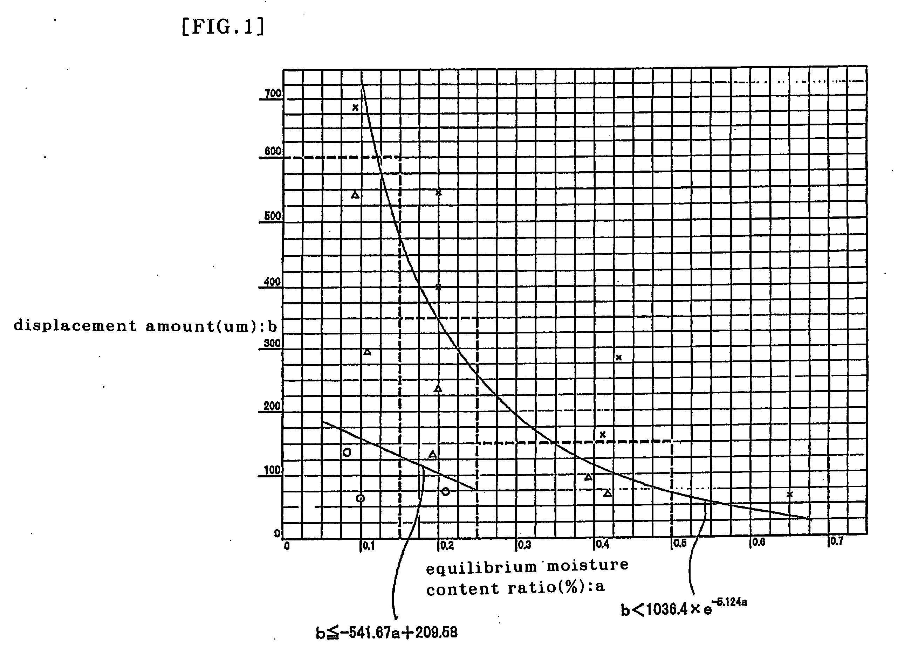

Fig. 1 is a graph in which the characteristics of the pressure-sensitive adhesive layers falling within the scope of the invention (Examples) and those falling outside the scope of the invention (Comparative Examples) are plotted.

### BEST MODE FOR CARRYING OUT THE INVENTION

The pressure-sensitive adhesive optical film of the invention includes an optical film and a pressure-sensitive adhesive layer placed on at least one side of the optical film. The pressure-sensitive adhesive layer may be placed on one or both sides of the optical film.

Any appropriate type of pressure-sensitive adhesive capable of forming a pressure-sensitive adhesive layer that satisfies the requirements for the equilibrium moisture content ratio (a) and the displacement amount (b) and also satisfies the relation of the equilibrium moisture content ratio (a) and the displacement amount (b) may be used without particular limitations. Examples of the pressure-sensitive adhesive include rubber pressure-sensitive adhesives, acrylic pressure-sensitive adhesives, silicone pressure-sensitive adhesives, urethane pressure-sensitive adhesives, vinyl alkyl ether pressure-sensitive adhesives, polyvinyl alcohol pressure-sensitive adhesives, polyvinylpyrrolidone pressure-sensitive adhesives, polyacrylamide pressure-sensitive adhesives, and cellulose pressure-sensitive adhesives.

Among these pressure-sensitive adhesives, those that may be preferably used have a high level of optical transparency and weather resistance or heat resistance and exhibits appropriate wettability and pressure-sensitive adhesive properties such as appropriate cohesiveness and adhesiveness. Acrylic pressure-sensitive adhesives have such properties and therefore are preferably used. Acrylic pressure-sensitive adhesives are also preferred, because a low equilibrium moisture content ratio (a) and a small displacement amount (b) can be designed with them.

Acrylic pressure-sensitive adhesives contain, as a base polymer, an acrylic polymer having a main skeleton of an alkyl (meth)acrylate monomer unit As used herein, the term "alkyl (meth)acrylate" refers to alkyl acrylate and/or alkyl methacrylate, and "(meth)" has the same meaning with respect to the invention. The alkyl (meth)acrylate that forms the main skeleton of the acrylic polymer may have a straight or branched chain alkyl group having 1 to 20 carbon atoms. Examples of the alkyl (meth)acrylate include methyl (meth)acrylate, ethyl (meth)acrylate, propyl (meth)acrylate, butyl (meth)acrylate, 2-ethylhexyl (meth)acrylate, isooctyl (meth)acrylate, isononyl (meth)acrylate, isomyristyl (meth)acrylate, and lauryl (meth)acrylate. One or more of these alkyl (meth)acrylates may be used alone or in any combination. The average number of carbon atoms of the alkyl groups is preferably from 3 to 9.

Among the acrylic polymers, an acrylic polymer having a main skeleton of a highly hydrophobic alkyl (meth)acrylate monomer unit is preferred in order to control the equilibrium moisture content ratio (a) to a low level. Generally, in view of the optical transparency, adequate wettability and cohesiveness, adhesive strength, weather resistance, heat resistance, or the like, the alkyl (meth)acrylate that may be used in practice preferably has a straight or branched chain alkyl group having 3 to 9 carbon atoms, more preferably having 4 to 8 carbon atoms. The alkyl group with a higher number of carbon atoms can be more hydrophobic and therefore is preferred in order to keep the equilibrium moisture content at a low level. Examples of such alkyl (meth)acrylate include butyl (meth)acrylate and isooctyl (meth)acrylate. In particular, isooctyl (meth)acrylate is highly hydrophobic and therefore preferred.

In order to improve adhesion properties and heat resistance, at least one copolymerizable monomer may be introduced into the acrylic polymer by copolymerization. Examples of copolymerizable monomers include hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methyl acrylate; carboxyl group-containing monomers such as include (meth)acrylic acid, carboxyethyl (meth)acrylate, carboxypentyl (meth)acrylate, itaconic acid, maleic acid, fumaric acid, and crotonic acid; acid anhydride group-containing monomers such as maleic anhydride and itaconic anhydride; caprolactone addition products of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; and phosphate group-containing monomers such as 2-hydroxyethylacryloyl phosphate.

And monomers for modification exemplified (N-substituted) amide monomers such as (meth)acrylamide, N,N-dimethyl(meth)acrylamide, N,N-diethyl(meth)acrylamide, N-hexyl(meth)acrylamide, N-methyl(meth)acrylamide, N-butyl(meth)acrylamide, N-butyl(meth)acrylamide, N-methylol(meth)acrylamide, an N-methylolpropane(meth)acrylamide; alkylaminoalkyl (meth)acrylate monomers such as aminoethyl (meth)acrylate, aminopropyl (meth)acrylate, N,N-dimethylaminoethyl (meth)acrylate, tert-butylaminoethyl (meth)acrylate, and 3-(3-pyrinidyl)propyl (meth)acrylate; alkoxyalkyl (meth)acrylate monomers such as methoxyethyl (meth)acrylate and ethoxyethyl (meth)acrylate; and succinimide monomers such as N-(meth)acryloyloxymethylenesuccinimide, N-(meth)acryloyl-6-oxyhexamethylenesuocinimide, N-(meth)acryloyl-8-oxyoctamethylenesuccinimide, and N-acryloylmorpholine; maleimide monomers such as N-cyclohexylmaleimide, N-isopropylmaleimide, N-laurylmaleimide, and N-phenylmaleimide; and itaconimide monomers such as N-methylitaconimide, N-ethylitaconimide, N-butylitaconimide, N-octylitaconimide, N-2-ethylhexylitaconimide, N-cyclohexylitaconimide, and N-laurylitaconimide.

It is also possible to use monomers for modification such as vinyl acetate, vinyl propionate, N-vinylpyrrolidone, methylvinylpymolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers such as acrylonitrile and methacrylonitrile; epoxy group-containing acrylic monomers such as glycidyl (meth)acrylate; glycol acrylate monomers such as polyethylene glycol (meth)acrylate, polypropylene glycol (meth)acrylate, methoxyethylene glycol (meth)acrylate, and methoxypolypropylene glycol (meth)acrylate; and acrylate ester monomers such as tetrahydrofurfuryl (meth)acrylate, fluoro(meth)acrylate, silicone (meth)acrylate, and 2-methoxyethyl acrylate.

The content of the copolymerized monomer in the acrylic polymer is preferably, but not particularly limited to, 0 to 30% by weight, more preferably 0.1 to 15 % by weight, based on the total amount of the constitute monomers.

Among these copolymerizable monomers, hydroxyl group-containing monomers, carboxyl group-containing monomers, and acid anhydride group-containing monomers are preferably used in view of properties for optical film applications, such as adhesion to liquid crystal cells and durability. These monomers can act as reactive sites with the crosslinking agent Hydroxyl group-containing monomers, carboxyl group-containing monomers, acid anhydride group-containing monomers, or the like are highly reactive with intermolecular crosslinking agents and therefore are preferably used to form a pressure-sensitive adhesive layer with improved cohesiveness and heat resistance. When having such a functional group, a monomer that is highly hydrophobic and highly reactive and copolymerizable in a small amount is preferably used, because it tends to raise the equilibrium moisture content ratio (a). For example, 4-hydroxybutyl (meth)acrylate rather than 2-hydroxyethyl (meth)acrylate is preferably used as the hydroxyl group-containing monomer, and hydroxy higher alkyl (meth)acrylate such as 6-hydroxyhexyl (meth)acrylate is more preferably used. The hydroxyl group-containing monomer is preferably used in an amount as small as possible, because it tends to raise the equilibrium moisture content ratio (a) as mentioned above. The content of the hydroxyl group-containing monomer used as a copolymerizable monomer is preferably from 0.01 to 5% by weight, more preferably from 0.01 to 3% by weight, based on the total amount of the constituent monomers. The content of the carboxyl group-containing monomer used as a copolymerizable monomer is preferably from 0.01 to 10% by weight, more preferably from 0.01 to 7% by weight, based on the total amount of the constituent monomers.

A highly hydrophobic copolymerizable monomer is also preferably used as the copolymerizable monomer in order to control the equilibrium moisture content ratio (a) to a low level. For example, maleimide monomers or itaconimide monomers are preferably used as adhesion-modifying monomers, because they are also characterized in that they hardly raise the equilibrium moisture content ratio (a) of the acrylic polymer, when copolymerized into the acrylic polymer.

The weight average molecular weight of the acrylic polymer is preferably, but not limited to, from about 300,000 to about 2,500,000. The acrylic polymer may be produced by a variety of known methods, and, for example, radical polymerization methods such as bulk polymerization, solution polymerization, and suspension polymerization methods may be appropriately selected. Any of various known radical polymerization initiators such as azo initiators and peroxide initiators may be used. The reaction temperature is generally from about 50 to about 80°C, and the reaction time is generally from 1 to 8 hours. Ethyl acetate, toluene or the like is generally used as a solvent for the acrylic polymer. The concentration of the solution is generally from about 20 to about 80% by weight

The pressure-sensitive adhesive is preferable a pressure-sensitive adhesive composition comprising the base polymer blended with a crosslinking agent Examples of the crosslinking agent that may be blended into the pressure-sensitive adhesive include organic crosslinking agents and multifunctional metal chelates. Examples of organic crosslinking agents include epoxy crosslinking agents, isocyanate crosslinking agents, imine crosslinking agents, and peroxide crosslinking agents. These crosslinking agents are used alone or a combination two or more. The organic crosslinking agent is preferably an isocyanate crosslinking agent A combination of the isocyanate crosslinking agent and the peroxide crosslinking agent is preferably used. The multifunctional metal chelate may comprise a multivalent metal and an organic compound that are covalently or coordinately bonded to one another. Examples of the multivalent metal atom include Al, Cr, Zr, Co, Cu, Fe, Ni, V, Zn, In, Ca, Mg, Mn, Y, Ce, Sr, Ba, Mo, La, Sn, and Ti. The organic compound has a covalent or coordinate bond-forming atom such as an oxygen atom. Examples of the organic compound include alkyl esters, alcohol compounds, carboxylic acid compounds, ether compounds, and ketone compounds.

While the blending ratio between the base polymer such as an acrylic polymer and the crosslinking agent is not particularly limited, in general, 100 parts by weight of the base polymer (the solids) is preferably blended with about 0.001 to about 20 parts by weight of the crosslinking agent (the solids), more preferably with about 0.01 to about 15 parts by weight of the crosslinking agent (the solids). The crosslinking agent is preferably an isocyanate crosslinking agent or a peroxide crosslinking agent The amount of the peroxide crosslinking agent is preferably from about 0.02 to about 2 parts by weight, more preferably from about 0.05 to about 1 part by weight, based on 100 parts by weight of the base polymer (the solids). The amount of the isocyanate crosslinking agent is preferably from about 0.001 to about 2 parts by weight, more preferably from about 0.01 to about 1.5 parts by weight, based on 100 parts by weight of the base polymer (the solids). The isocyanate crosslinking agent and the peroxide crosslinking agent may be each used within the range described above or preferably used in combination with each other.

If necessary, the pressure-sensitive adhesive may conveniently contain various types of additives such as tackifiers, plasticizers, fillers such as glass fibers, glass beads, metal power, or any other inorganic powder, pigments, colorants, antioxidants, ultraviolet absorbers, and silane coupling agents, without departing from the object of the present invention. The pressure-sensitive adhesive layer may also contain fine particles so as to have light diffusion properties.

The additive is preferably a silane coupling agent, and preferably about 0.001 to about 10 parts by weight, more preferably about 0.005 to about 5 parts by weight of a silane coupling agent (the solids) is added to 100 parts by weight of the base polymer (the solids). Any known conventional silane coupling agent may be used without particular limitations. Examples of silane coupling agents include epoxy group-containing silane coupling agents such as γ-glycidoxypropyltrimethoxysilane, γ-glycidoxypropyltriethoxysilane, γ-glycidoxypropylmethyldiethoxysilane, and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane, and 3-triethoxysilyl-N-(1,3-dimethylbutylidene)propylamine; (meth)acrylic group-containing silane coupling agents such as 3-acryloxypropyltrimethoxysilane and 3-methacryloxypropyltriethoxysilane; and isocyanate group-containing silane coupling agents such as 3-isocyanatepropyltriethoxysilane.

For example, the type of the base monomer or the copolymerizable monomer, the content of the monomer, the type of the crosslinking agent, the content of the crosslinking agent, the type of the additive, the amount of the additive, or the like may be controlled so that the equilibrium moisture content ratio (a) and the displace amount (b) with respect to the pressure-sensitive adhesive layer of the present invention can each fall within the range and satisfy the relation.

In order to control the equilibrium moisture content ratio (a) of the pressure-sensitive adhesive layer to a low level, highly hydrophobic monomers are preferably used as described above. In order to reduce the displacement amount (b), the pressure-sensitive adhesive layer should have high cohesiveness. For example, methods for reducing the displacement amount (b) effectively use a base polymer with increased molecular weight, a base polymer including a copolymerized high-glass-transition-temperature monomer, or an increased amount of the crosslinking agent to increase the degree of crosslinking. In general, an acrylic polymer constituted with a straight or branched chain C₃ to C₉ alkyl (meth)acrylate monomer unit, which is frequently used in practice, may be used as the base polymer. In this case, the alkyl group with a larger number of carbon atoms can lower the glass transition temperature and generally produce an acrylic polymer with lower cohesiveness, which may tend to increase the displacement amount (b). For example, an acrylic polymer produced with a carboxyl group-containing monomer such as acrylic acid is well known to significantly contribute to an increase in the cohesiveness of the resulting pressure-sensitive adhesive layer. Such an acrylic polymer tends to reduce the displacement amount (b) but tends to increase the equilibrium moisture content ratio (a) at the same time. Therefore, due consideration should be given to the selection of the composition, because there may be some trade-offs between the equilibrium moisture content ratio (a) and the displacement amount (b) as described above. In an embodiment of the invention, the pressure-sensitive adhesive layer may be formed by a process including the steps of selecting the base monomer (for example, alkyl (meth)acrylate) and the copolymerizable monomer in the preparation of the base polymer and controlling the saturated moisture content, the content of the base polymer, and/or the degree of crosslinking so that the specified residual moisture content ratio (a) and the specified displacement amount (b) can be achieved.

An anchor coat layer may also be provided between the pressure-sensitive adhesive layer and the optical film in the pressure-sensitive adhesive optical film of the invention. The anchor coat layer is preferably made of, but not limited to, a material that has good adhesion to both the pressure-sensitive adhesive layer and the optical film and can form a film with high cohesion. Materials having such properties that may be used include various polymers, metal oxide sols, silica sols, and the like. In particular, polymers are preferably used.

Examples of such polymers include polyurethane resins, polyester resins, and polymers having an amino group in their molecule. The polymer to be used may be in any of a solvent-soluble form, a water-dispersible form and a water-soluble form. For example, water-soluble polyurethanes, water-soluble polyesters, water-soluble polyamides, and the like, and water-dispersible resins (such as ethylene-vinyl acetate copolymer emulsions and (meth)acrylic polymer emulsions) may be used. Water-dispersible types that may be used include emulsions produced by emulsifying various resins such as polyurethanes, polyesters and polyamides with an emulsifying agent; and self-emulsified products produced by introducing a water-dispersible hydrophilic anionic, cationic or nonionic group into any of the above resins. Ionic polymer complexes may also be used.

Any type of optical film that is used to form image display devices such as liquid crystal display devices may be used as the optical film of the pressure-sensitive adhesive optical film of the present invention. The optical film to be used preferably has water-vapor permeability at 80°C and 90% R.H. of 1000 g/m² per 24 hours or less. In an embodiment of the invention, the water-vapor permeability of the optical film to be used is preferably 800 g/m² per 24 hours or less, more preferably 500 g/m² per 24 hours or less, even more preferably 200 g/m² per 24 hours or less.

Examples of materials having such a water-vapor permeability that may be used include polycarbonate polymers, arylate polymers, polyester polymers such as polyethylene terephthalate and polyethylene naphthalate, amide polymers such as nylon and aromatic polyamides, polyolefin polymers such as polyethylene, polypropylene and ethylene-propylene copolymers, cyclo system- or norbornene structure-containing cyclic olefin resins, and any mixture thereof.

Moreover, as is described in Japanese Patent Laid-Open Publication No. 2001-343529 (WO 01/37007), polymer films, for example, resin compositions including (A) thermoplastic resins having substituted and/or non-substituted imido group is in side chain, and (B) thermoplastic resins having substituted and/or non-substituted phenyl and nitrile group in sidechain may be mentioned. As an illustrative example, a film may be mentioned that is made of a resin composition including alternating copolymer comprising iso-butylene and N-methyl maleimide, and acrylonitrile-styrene copolymer. A film comprising mixture extruded article of resin compositions etc. may be used.

Among these materials, cyclic olefin resins are preferred. Cyclic olefin resin is a generic name for such resins as those disclosed in JP-A Nos. 03-14882 and 03-122137. Specific examples thereof include ring-opened polymers of cyclic olefins, addition polymers of cyclic olefins, random copolymers of cyclic olefins and α-olefins such as ethylene and propylene, and graft polymers produced by modification thereof with unsaturated carboxylic acids or derivatives thereof, and hydrides thereof. Examples of the cyclic olefin include, but are not limited to, norbornene, tetracyclododecen, and derivatives thereof.
Commercially available products thereof include Zeonex and Zeonor series manufactured by Nippon Zeon Co., Ltd., Arton series manufactured by JSR Corporation, and Topas series manufactured by Ticona.

For example, an optical film made of the low water-vapor permeability material may be used as a transparent protective film, a retardation film, or the like for a polarizer.

As the optical film for use in the pressure-sensitive adhesive optical film of the present invention, a polarizing plate is exemplified. A polarizing plate comprising a polarizer and a transparent protective film provided on one side or both sides of the polarizer is generally used.

A polarizer is not limited especially but various kinds of polarizer may be used. As a polarizer, for example, a film that is uniaxially stretched after having dichromatic substances, such as iodine and dichromatic dye, absorbed to hydrophilic high molecular weight polymer films, such as polyvinyl alcohol type film, partially formalized polyvinyl alcohol type film, and ethylene-vinyl acetate copolymer type partially saponified film; poly-ene type alignment films, such as dehydrated polyvinyl alcohol and dehydrochlorinated polyvinyl chloride, etc. may be mentioned. In these, a polyvinyl alcohol type film on which dichromatic materials such as iodine, is absorbed and aligned after stretched is suitably used. Although thickness of polarizer is not especially limited, the thickness of about 5 to 80 µm is commonly adopted.

A polarizer that is uniaxially stretched after a polyvinyl alcohol type film dyed with iodine is obtained by stretching a polyvinyl alcohol film by 3 to 7 times the original length, after dipped and dyed in aqueous solution of iodine. If needed the film may also be dipped in aqueous solutions, such as boric acid and potassium iodide, which may include zinc sulfate, zinc chloride. Furthermore, before dyeing, the polyvinyl alcohol type film may be dipped in water and rinsed if needed. By rinsing polyvinyl alcohol type film with water, effect of preventing un-uniformity, such as unevenness of dyeing, is expected by making polyvinyl alcohol type film swelled in addition that also soils and blocking inhibitors on the polyvinyl alcohol type film surface may be washed off. Stretching may be applied after dyed with iodine or may be applied concurrently, or conversely dyeing with iodine may be applied after stretching. Stretching is applicable in aqueous solutions, such as boric acid and potassium iodide, and in water bath.

As a materials forming the transparent protective film prepared on one side or both sides of the above-mentioned polarizer, with outstanding transparency, mechanical strength, heat stability, moisture cover property, isotropy, etc. may be preferable. A transparent protective film made of the low water-vapor permeability material is preferably attached to the pressure-sensitive adhesive layer-receiving side. The other side may receive materials other than the low water-vapor permeability material, such as cellulose polymers such as acetyl cellulose and triacetyl cellulose, acrylic polymers such as poly(methyl methacrylate), and styrene polymers such as polystyrene, acrylonitrile-styrene copolymers (AS resins). Examples of materials that may be used to form the transparent protective film also include vinyl chloride polymers, imide polymers, sulfone polymers, polyethersulfone polymers, polyetheretherketone polymers, polyphenylene sulfide polymers, vinyl alcohol polymers, vinylidene chloride polymers, vinyl butyral polymers, polyoxymethylene polymers, epoxy polymers, and any blends thereof. The transparent protective film may also be in the form of a cured layer of thermosetting resin or ultraviolet-curable resin such as acrylic, urethane, acrylic urethane, epoxy and silicone resin.

In general, a thickness of the transparent protective film, which can be determined arbitrarily, is 1 to 500 µm, especially 5 to 200 µm in viewpoint of strength, work handling and thin layer.

The transparent protective film is preferably as colorless as possible. Thus, a transparent protective film is preferably used which has a film-thickness-direction retardation of -90 nm to +75 nm, wherein the retardation (Rth) is represented by the formula: Rth=[(nx+ny)/ (2-nz)]d, wherein nx and ny are each a principal refractive index in the plane of the film, nz is a refractive index in the film-thickness direction, and d is the thickness of the film. If a transparent protective film with such a thickness-direction retardation value (Rth) of -90 nm to +75 nm is used, coloring (optical coloring) of the polarizing plate can be almost avoided, which could otherwise be caused by any other transparent protective film. The thickness-direction retardation (Rth) is more preferably from -80 nm to +60 nm, particularly preferably from -70 nm to +45 nm.

In addition, when the transparent protective films are provided on both sides of the polarizer, the transparent protective films comprising same polymer material may be used on both of a front side and a back side, and the transparent protective films comprising different polymer materials etc. may be used. The polarizer and the transparent protective film are bonded with an aqueous adhesive. The aqueous adhesive includes isocyanate based adhesives, polyvinyl alcohol based adhesives, gelatin based adhesives, vinyl based latex based, aqueous polyester based adhesives, and the likes.

As the opposite side of the polarizing-adhering surface above-mentioned transparent protective film, a film with a hard coat layer and various processing aiming for antireflection, sticking prevention and diffusion or anti glare may be used.

A hard coat processing is applied for the purpose of protecting the surface of the polarization plate from damage, and this hard coat film may be formed by a method in which, for example, a curable coated film with excellent hardness, slide property etc. is added on the surface of the protective film using suitable ultraviolet curable type resins, such as acrylic type and silicone type resins. Antireflection processing is applied for the purpose of antireflection of outdoor daylight on the surface of a polarization plate and it may be prepared by forming an antireflection film according to the conventional method etc. Besides, a sticking prevention processing is applied for the purpose of adherence prevention with adjoining layer.

In addition, an anti glare processing is applied in order to prevent a disadvantage that outdoor daylight reflects on the surface of a polarization plate to disturb visual recognition of transmitting light through the polarization plate, and the processing may be applied, for example, by giving a fine concavo-convex structure to a surface of the protective film using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 µm, for example, such as inorganic type fine particles that may have conductivity comprising silica, alumina, titania, zirconia, tin oxides, indium oxides, cadmium oxides, antimony oxides, etc., and organic type fine particles comprising cross-linked of non-cross-linked polymers may be used. When forming fine concavo-convex structure on the surface, the amount of fine particle used is usually about 2 to 50 weight parts to the transparent resin 100 weight parts that forms the fine concavo-convex structure on the surface, and preferably 5 to 25 weight parts. An anti glare layer may serve as a diffusion layer (viewing angle expanding function etc.) for diffusing transmitting light through the polarization plate and expanding a viewing angle etc.

In addition, the above-mentioned antireflection layer, sticking prevention layer, diffusion layer, anti glare layer, etc. may be built in the protective film itself, and also they may be prepared as an optical layer different from the protective film.

Further an optical film of the present invention may be used as other optical layers, such as a reflective plate, a transflective plate, a retardation plate (a half wavelength plate and a quarter wavelength plate included), and a viewing angle compensation film, which may be used for formation of a liquid crystal display etc.. These are used in practice as an optical film, or as one layer or two layers or more of optical layers laminated with polarizing plate.

Especially preferable polarizing plates are; a reflection type polarization plate or a transflective type polarization plate in which a reflective plate or a transflective reflective plate is further laminated onto a polarizing plate of the present invention; an elliptically polarizing plate or a circular polarizing plate in which a retardation plate is further laminated onto the polarizing plate; a wide viewing angle polarization plate in which a viewing angle compensation film is further laminated onto the polarizing plate; or a polarizing plate in which a brightness enhancement film is further laminated onto the polarizing plate.

A reflective layer is prepared on a polarization plate to give a reflection type polarization plate, and this type of plate is used for a liquid crystal display in which an incident light from a view side (display side) is reflected to give a display. This type of plate does not require built-in light sources, such as a backlight, but has an advantage that a liquid crystal display may easily be made thinner. A reflection type polarization plate may be formed using suitable methods, such as a method in which a reflective layer of metal etc. is, if required attached to one side of a polarization plate through a transparent protective layer etc.

As an example of a reflection type polarization plate, a plate may be mentioned on which, if required, a reflective layer is formed using a method of attaching a foil and vapor deposition film of reflective metals, such as aluminum, to one side of a matte treated protective film. Moreover, a different type of plate with a fine concavo-convex structure on the surface obtained by mixing fine particle into the above-mentioned protective film, on which a reflective layer of concavo-convex structure is prepared, may be mentioned. The reflective layer that has the above-mentioned fine concavo-convex structure diffuses incident light by random reflection to prevent directivity and glaring appearance, and has an advantage of controlling unevenness of light and darkness etc. Moreover, the protective film containing the fine particle has an advantage that unevenness of light and darkness may be controlled more effectively, as a result that an incident light and its reflected light that is transmitted through the film are diffused. A reflective layer with fine concavo-convex structure on the surface effected by a surface fine concavo-convex structure of a protective film may be formed by a method of attaching a metal to the surface of a transparent protective layer directly using, for example, suitable methods of a vacuum evaporation method, such as a vacuum deposition method, an ion plating method, and a sputtering method, and a plating method etc.

Instead of a method in which a reflection plate is directly given to the protective film of the above-mentioned polarization plate, a reflection plate may also be used as a reflective sheet constituted by preparing a reflective layer on the suitable film for the transparent film. In addition, since a reflective layer is usually made of metal, it is desirable that the reflective side is covered with a protective film or a polarization plate etc. when used, from a viewpoint of preventing deterioration in reflectance by oxidation, of maintaining an initial reflectance for a long period of time and of avoiding preparation of a protective layer separately etc.

In addition, a transflective type polarizing plate may be obtained by preparing the above-mentioned reflective layer as a transflective type reflective layer, such as a half mirror etc. that reflects and transmits light A transflective type polarization plate is usually prepared in the backside of a liquid crystal cell and it may form a liquid crystal display unit of a type in which a picture is displayed by an incident light reflected from a view side (display side) when used in a comparatively well-lighted atmosphere. And this unit displays a picture, in a comparatively dark atmosphere, using embedded type light sources, such as a back light built in backside of a transflective type polarization plate. That is, the transflective type polarization plate is useful to obtain of a liquid crystal display of the type that saves energy of light sources, such as a back light, in a well-lighted atmosphere, and can be used with a built-in light source if needed in a comparatively dark atmosphere etc.

A description of the above-mentioned elliptically polarization plate or circularly polarization plate on which the retardation plate is laminated to the polarization plates will be made in the following paragraph. These polarization plates change linearly polarized light into elliptically polarized light or circularly polarized light, elliptically polarized light or circularly polarized light into linearly polarized light or change the polarization direction of linearly polarization by a function of the retardation plate. As a retardation plate that changes circularly polarized light into linearly polarized light or linearly polarized light into circularly polarized light, what is called a quarter wavelength plate (also called λ/4 plate) is used. Usually, half wavelength plate (also called λ/2 plate) is used, when changing the polarization direction of linearly polarized light

Elliptically polarization plate is effectively used to give a monochrome display without above-mentioned coloring by compensating (preventing) coloring (blue or yellow color) produced by birefringence of a liquid crystal layer of a super twisted nematic (STN) type liquid crystal display. Furthermore, a polarization plate in which three-dimensional refractive index is controlled may also preferably compensate (prevent) coloring produced when a screen of a liquid crystal display is viewed from an oblique direction. Circularly polarization plate is effectively used, for example, when adjusting a color tone of a picture of a reflection type liquid crystal display that provides a colored picture, and it also has function of antireflection.

As retardation plates, birefringence films obtained by uniaxial or biaxial stretching polymer materials, oriented films of liquid crystal polymers, and materials in which orientated layers of liquid crystal polymers are supported with films may be mentioned. Although a thickness of a retardation plate also is not especially limited, it is in general approximately from about 20 to 150 µm.

As polymer materials, for example, polyvinyl alcohols, polyvinyl butyrals, polymethyl vinyl ethers, poly hydroxyethyl acrylates, hydroxyethyl celluloses, hydroxypropyl celluloses, methyl celluloses, polycarbonates, polyarylates, polysulfones, polyethylene terephthalates, polyethylene naphthalates, polyethersulfones, polyphenylene sulfides, polyphenylene oxides, polyallyl sulfones, polyvinyl alcohols, polyamides, polyimides, polyolefins, polyvinyl chlorides, cellulose type polymers, or bipolymers, terpolymers, graft copolymers, blended materials of the above-mentioned polymers may be mentioned. These polymer raw materials make oriented materials (stretched film) using a stretching process and the like.

As liquid crystalline polymers, for example, various kinds of polymers of principal chain type and side chain type in which conjugated linear atomic groups (mesogens) demonstrating liquid crystalline orientation are introduced into a principal chain and a side chain may be mentioned. As examples of principal chain type liquid crystalline polymers, polymers having a structure where mesogen groups are combined by spacer parts demonstrating flexibility, for example, polyester based liquid crystalline polymers of nematic orientation property, discotic polymers, cholesteric polymers, etc. may be mentioned. As examples of side chain type liquid crystalline polymers, polymers having polysiloxanes, polyacrylates, polymethacrylates, or polymalonates as a principal chain structure, and polymers having mesogen parts comprising para-substituted ring compound units providing nematic orientation property as side chains via spacer parts comprising conjugated atomic groups may be mentioned. These liquid crystalline polymers, for example, is obtained by spreading a solution of a liquid crystal polymer on an orientation treated surface where rubbing treatment was performed to a surface of thin films, such as polyimide and polyvinyl alcohol, formed on a glass plate and or where silicon oxide was deposited by an oblique evaporation method, and then by heat-treating.

A retardation plate may be a retardation plate that has a proper retardation according to the purposes of use, such as various kinds of wavelength plates and plates aiming at compensation of coloring by birefringence of a liquid crystal layer and of visual angle, etc., and may be a retardation plate in which two or more sorts of retardation plates is laminated so that optical properties, such as retardation, may be controlled.

The above-mentioned elliptically polarization plate and an above-mentioned reflected type elliptically polarization plate are laminated plate combining suitably a polarization plate or a reflection type polarization plate with a retardation plate. This type of elliptically polarization plate etc. may be manufactured by combining a polarization plate (reflected type) and a retardation plate, and by laminating them one by one separately in the manufacture process of a liquid crystal display. On the other hand, the polarization plate in which lamination was beforehand carried out and was obtained as an optical film, such as an elliptically polarization plate, is excellent in a stable quality, a workability in lamination etc., and has an advantage in improved manufacturing efficiency of a liquid crystal display.

A viewing angle compensation film is a film for extending viewing angle so that a picture may look comparatively clearly, even when it is viewed from an oblique direction not from vertical direction to a screen. As such viewing angle compensation retardation plate, in addition, a film having birefringence property that is processed by uniaxial stretching or orthogonal bidirectional stretching and a biaxial stretched film as inclined orientation film etc. may be used. As inclined orientation film, for example, a film obtained using a method in which a heat shrinking film is adhered to a polymer film, and then the combined film is heated and stretched or shrunk under a condition of being influenced by a shrinking force, or a film that is oriented in oblique direction may be mentioned. The viewing angle compensation film is suitably combined for the purpose of prevention of coloring caused by change of visible angle based on retardation by liquid crystal cell etc. and of expansion of viewing angle with good visibility.

Besides, a compensation plate in which an optical anisotropy layer consisting of an alignment layer of liquid crystal polymer, especially consisting of an inclined alignment layer of discotic liquid crystal polymer is supported with triacetylcellulose film may preferably be used from a viewpoint of attaining a wide viewing angle with good visibility.

The polarization plate with which a polarization plate and a brightness enhancement film are adhered together is usually used being prepared in a backside of a liquid crystal cell. A brightness enhancement film shows a characteristic that reflects linearly polarization light with a predetermined polarization axis, or circularly polarization light with a predetermined direction, and that transmits other light, when natural light by back lights of a liquid crystal display or by reflection from a back-side etc., comes in. The polarization plate, which is obtained by laminating a brightness enhancement film to a polarization plate, thus does not transmit light without the predetermined polarization state and reflects it, while obtaining transmitted light with the predetermined polarization state by accepting a light from light sources, such as a backlight This polarization plate makes the light reflected by the brightness enhancement film further reversed through the reflective layer prepared in the backside and forces the light re-enter into the brightness enhancement film, and increases the quantity of the transmitted light through the brightness enhancement film by transmitting a part or all of the light as light with the predetermined polarization state. The polarization plate simultaneously supplies polarized light that is difficult to be absorbed in a polarizer, and increases the quantity of the light usable for a liquid crystal picture display etc., and as a result luminosity may be improved. That is, in the case where the light enters through a polarizer from backside of a liquid crystal cell by the back light etc. without using a brightness enhancement film, most of the light, with a polarization direction different from the polarization axis of a polarizer, is absorbed by the polarizer, and does not transmit through the polarizer. This means that although influenced with the characteristics of the polarizer used, about 50 percent of light is absorbed by the polarizer, the quantity of the light usable for a liquid crystal picture display etc. decreases so much, and a resulting picture displayed becomes dark. A brightness enhancement film does not enter the light with the polarizing direction absorbed by the polarizer into the polarizer but reflects the light once by the brightness enhancement film, and further makes the light reversed through the reflective layer etc. prepared in the backside to re-enter the light into the brightness enhancement film. By this above-mentioned repeated operation, only when the polarization direction of the light reflected and reversed between the both becomes to have the polarization direction which may pass a polarizer, the brightness enhancement film transmits the light to supply it to the polarizer. As a result, the light from a backlight may be efficiently used for the display of the picture of a liquid crystal display to obtain a bright screen.

A diffusion plate may also be prepared between brightness enhancement film and the above described reflective layer, etc. A polarized light reflected by the brightness enhancement film goes to the above described reflective layer etc., and the diffusion plate installed diffuses passing light uniformly and changes the light state into depolarization at the same time. That is, the diffusion plate returns polarized light to natural light state. Steps are repeated where light, in the unpolarized state, i.e., natural light state, reflects through reflective layer and the like, and again goes into brightness enhancement film through diffusion plate toward reflective layer and the like. Diffusion plate that returns polarized light to the natural light state is installed between brightness enhancement film and the above described reflective layer, and the like, in this way, and thus a uniform and bright screen may be provided while maintaining brightness of display screen, and simultaneously controlling non-uniformity of brightness of the display screen. By preparing such diffusion plate, it is considered that number of repetition times of reflection of a first incident light increases with sufficient degree to provide uniform and bright display screen conjointly with diffusion function of the diffusion plate.

The suitable films are used as the above-mentioned brightness enhancement film. Namely, multilayer thin film of a dielectric substance; a laminated film that has the characteristics of transmitting a linearly polarized light with a predetermined polarizing axis, and of reflecting other light, such as the multilayer laminated film of the thin film; an aligned film of cholesteric liquid-crystal polymer; a film that has the characteristics of reflecting a circularly polarized light with either left-handed or right-handed rotation and transmitting other light, such as a film on which the aligned cholesteric liquid crystal layer is supported; etc. may be mentioned.

Therefore, in the brightness enhancement film of a type that transmits a linearly polarized light having the above-mentioned predetermined polarization axis, by arranging the polarization axis of the transmitted light and entering the light into a polarization plate as it is, the absorption loss by the polarization plate is controlled and the polarized light can be transmitted efficiently. On the other hand, in the brightness enhancement film of a type that transmits a circularly polarized light as a cholesteric liquid-crystal layer, the light may be entered into a polarizer as it is, but it is desirable to enter the light into a polarizer after changing the circularly polarized light to a linearly polarized light through a retardation plate, taking control an absorption loss into consideration. In addition, a circularly polarized light is convertible into a linearly polarized light using a quarter wavelength plate as the retardation plate.

A retardation plate that works as a quarter wavelength plate in a wide wavelength ranges, such as a visible-light region, is obtained by a method in which a retardation layer working as a quarter wavelength plate to a pale color light with a wavelength of 550 nm is laminated with a retardation layer having other retardation characteristics, such as a retardation layer working as a half-wavelength plate. Therefore, the retardation plate located between a polarization plate and a brightness enhancement film may consist of one or more retardation layers.

In addition, also in a cholesteric liquid-crystal layer, a layer reflecting a circularly polarized light in a wide wavelength ranges, such as a visible-light region, may be obtained by adopting a configuration structure in which two or more layers with different reflective wavelength are laminated together. Thus a transmitted circularly polarized light in a wide wavelength range may be obtained using this type of cholesteric liquid-crystal layer.

Moreover, the polarization plate may consist of multi-layered film of laminated layers of a polarization plate and two of more of optical layers as the above-mentioned separated type polarization plate. Therefore, a polarization plate may be a reflection type elliptically polarization plate or a semi-transmission type elliptically polarization plate, etc. in which the above-mentioned reflection type polarization plate or a transflective type polarization plate is combined with above described retardation plate respectively.

Although an optical film with the above described optical layer laminated to the polarizing plate may be formed by a method in which laminating is separately carried out sequentially in manufacturing process of a liquid crystal display etc., an optical film in a form of being laminated beforehand has an outstanding advantage that it has excellent stability in quality and assembly workability, etc., and thus manufacturing processes ability of a liquid crystal display etc. may be raised. Proper adhesion means, such as an adhesive layer, may be used for laminating. On the occasion of adhesion of the above described polarizing plate and other optical films, the optical axis may be set as a suitable configuration angle according to the target retardation characteristics etc.

A description is then given of methods for producing the pressure-sensitive adhesive optical film. Examples of methods for forming the pressure-sensitive adhesive layer include, but are not limited to, a method including applying a pressure-sensitive adhesive solution to the optical film and drying it and a method including forming the pressure-sensitive adhesive layer on a release sheet and transferring it from the release sheet. Coating methods that may be used include roll coating methods such as reverse coating and gravure coating and other coating methods such as spin coating, screen coating, fountain coating, dipping, and spraying. The thickness of the pressure-sensitive adhesive layer is preferably, but not limited to, from about 10 to about 40 µm.

When the anchor coat layer is placed, the pressure-sensitive adhesive layer is formed after the anchor coat layer is formed on the optical film. For example, an anchor component solution such as an aqueous polyethyleneimine solution may be applied by an application method such as coating, dipping or spraying and dried to form an anchor coat layer. The thickness of the anchor coat layer is preferably from about 10 to about 5,000 nm, more preferably from 50 to 500 nm. If the anchor coat layer is too thin, it could fail to have properties as a bulk or fail to exhibit sufficient strength so that the resulting adhesion could be insufficient in some cases. If the anchor coat layer is too thick, the optical properties could be degraded.

In the process of forming the pressure-sensitive adhesive layer and so on, the optical film may be subjected to activation treatment. Various methods such as corona treatment, low-pressure UV treatment, and plasma treatment may be used for the activation treatment An antistatic layer may also be formed as needed.

Examples of constituent materials of a release sheet include: proper thin items such as paper, synthetic resin films made of polyethylene, polypropylene, polyethylene terephthalate; a rubber sheet, paper, cloth, unwoven fabric, net, a foam sheet and a metal foil, and a laminate thereof. In order to enhance releasability from a pressure-sensitive adhesive layer, a release treatment imparting a low adherence, such as a silicone treatment, a long chain alkylation treatment or a fluorination treatment, may be applied onto a surface of a release sheet when required.

In addition, ultraviolet absorbing property may be given to the above-mentioned each layer of the optical film and the adhesive layer etc. of the pressure-sensitive adhesive optical film of the present invention, using a method of adding UV absorbents, such as salicylic acid ester type compounds, benzophenol type compounds, benzotriazol type compounds, cyano acrylate type compounds, and nickel complex salt type compounds.

The pressure-sensitive adhesive optical film of the present invention is preferably used to form various types of image displays such as liquid crystal displays. Liquid crystal displays may be formed according to conventional techniques. Specifically, liquid crystal displays are generally formed by appropriately assembling a liquid crystal cell and the pressure-sensitive adhesive optical film and optionally other components such as a lighting system and incorporating a driving circuit according to any conventional technique, except that the pressure-sensitive adhesive optical film of the present invention is used. Any type of liquid crystal cell may also be used such as a TN type, an STN type and a n type.

Suitable liquid crystal displays, such as liquid crystal display with which the above pressure-sensitive adhesive optical film has been located at one side or both sides of the liquid crystal cell, and with which a backlight or a reflective plate is used for a lighting system may be manufactured. In this case, the pressure-sensitive adhesive optical film may be installed in one side or both sides of the liquid crystal cell. When installing the pressure-sensitive adhesive optical films in both sides, they may be of the same type or of different type. Furthermore, in assembling a liquid crystal display, suitable parts, such as diffusion plate, anti-glare layer, antireflection film, protective plate, prism array, lens array sheet, optical diffusion plate, and backlight, may be installed in suitable position in one layer or two or more layers.

Subsequently, organic electro luminescence equipment (organic EL display) will be explained. Generally, in organic EL display, a transparent electrode, an organic luminescence layer and a metal electrode are laminated on a transparent substrate in an order configuring an illuminant (organic electro luminescence illuminant). Here, a organic luminescence layer is a laminated material of various organic thin films, and much compositions with various combination are known, for example, a laminated material of hole injection layer comprising triphenylamine derivatives etc., a luminescence layer comprising fluorescent organic solids, such as anthracene; a laminated material of electronic injection layer comprising such a luminescence layer and perylene derivatives, etc.; laminated material of these hole injection layers, luminescence layer, and electronic injection layer etc.

An organic EL display emits light based on a principle that positive hole and electron are injected into an organic luminescence layer by impressing voltage between a transparent electrode and a metal electrode, the energy produced by recombination of these positive holes and electrons excites fluorescent substance, and subsequently light is emitted when excited fluorescent substance returns to ground state. A mechanism called recombination which takes place in an intermediate process is the same as a mechanism in common diodes, and, as is expected, there is a strong non-linear relationship between electric current and luminescence strength accompanied by rectification nature to applied voltage.

In an organic EL display, in order to take out luminescence in an organic luminescence layer, at least one electrode must be transparent. The transparent electrode usually formed with transparent electric conductor, such as indium tin oxide (ITO), is used as an anode. On the other hand, in order to make electronic injection easier and to increase luminescence efficiency, it is important that a substance with small work function is used for cathode, and metal electrodes, such as Mg-Ag and Al-Li, are usually used.

In organic EL display of such a configuration, an organic luminescence layer is formed by a very thin film about 10nm in thickness. For this reason, light is transmitted nearly completely through organic luminescence layer as through transparent electrode. Consequently, since the light that enters, when light is not emitted, as incident light from a surface of a transparent substrate and is transmitted through a transparent electrode and an organic luminescence layer and then is reflected by a metal electrode, appears in front surface side of the transparent substrate again, a display side of the organic EL display looks like mirror if viewed from outside.

In an organic EL display containing an organic electro luminescence illuminant equipped with a transparent electrode on a surface side of an organic luminescence layer that emits light by impression of voltage, and at the same time equipped with a metal electrode on a back side of organic luminescence layer, a retardation plate may be installed between these transparent electrodes and a polarization plate, while preparing the polarization plate on the surface side of the transparent electrode.

Since the retardation plate and the polarization plate have function polarizing the light that has entered as incident light from outside and has been reflected by the metal electrode, they have an effect of making the mirror surface of metal electrode not visible from outside by the polarization action. If a retardation plate is configured with a quarter wavelength plate and the angle between the two polarization directions of the polarization plate and the retardation plate is adjusted to π/4, the mirror surface of the metal electrode may be completely covered.

This means that only linearly polarized light component of the external light that enters as incident light into this organic EL display is transmitted with the work of polarization plate. This linearly polarized light generally gives an elliptically polarized light by the retardation plate, and especially the retardation plate is a quarter wavelength plate, and moreover when the angle between the two polarization directions of the polarization plate and the retardation plate is adjusted to n/4, it gives a circularly polarized light

This circularly polarized light is transmitted through the transparent substrate, the transparent electrode and the organic thin film, and is reflected by the metal electrode, and then is transmitted through the organic thin film, the transparent electrode and the transparent substrate again, and is turned into a linearly polarized light again with the retardation plate. And since this linearly polarized light lies at right angles to the polarization direction of the polarization plate, it cannot be transmitted through the polarization plate. As the result, mirror surface of the metal electrode may be completely covered.

### EXAMPLES

The present invention is more specifically described with some examples which are not intended to limit the scope of the invention. Unless otherwise stated, "part" or "parts" and "%" in each example are by weight.

### (Water-Vapor Permeability)

The water-vapor permeability was measured by the water-vapor permeability test (cup method) according to JIS Z 0208. A sample with a diameter of 60 mm obtained by cutting was placed in an about 15 g calcium chloride-containing water-vapor-permeable cup. The cup was placed in a thermostat at 80°C and 90% and allowed to stand for 24 hours. An increase in the weight of the calcium chloride from before to after the standing was measured and used to calculate the water-vapor permeability (g/m² per 24 hours).

### (Preparation of Polarizing Plate)

An 80 µm-thick polyvinyl alcohol film was stretched to 3 times between rolls different in velocity ratio, while it was placed in an aqueous 0.3% iodine solution at 30°C. The film was then stretched to a total draw ratio of 6 times in an aqueous solution containing 4% of boric acid and 10% of potassium iodide at 60°C. The film was then washed by immersion in an aqueous solution containing 1.5% of potassium iodide at 30°C for 10 seconds and then dried at 50°C for 4 minutes to give a polarizer. An 80 µm-thick saponified triacetylcellulose film was bonded to one side of the polarizer with a polyvinyl alcohol adhesive. A 70 µm-thick cyclic olefin resin film (Zeonor (trade name) manufactured by Nippon Zeon Co., Ltd.) was bonded to the other side of the polarizer with a polyvinyl alcohol adhesive. The cyclic olefin resin film had a water-vapor permeability of 127 g/m² per 24 hours at 80°C and 90%R.H.

### Example 1

### (Preparation of Pressure-Sensitive Adhesive)

To a reaction vessel equipped with a condenser tube, a nitrogen introducing tube, a thermometer, and a stirrer were added 100 parts of butyl acrylate, 5 parts of acrylic acid, 0.075 parts of 2-hydroxyethyl acrylate, 0.3 parts of 2,2'-azobisisobutyronitrile, and ethyl acetate to form a solution. While nitrogen gas was blown into the solution, the solution was then allowed to react at 60°C for 4 hours under stirring to give a solution containing an acrylic polymer with a weight average molecular weight of 2,200,000. Ethyl acetate was then added to the acrylic polymer-containing solution so that an acrylic polymer solution (A) with an adjusted solids content of 30% was obtained.

Based on 100 parts of the solids of the acrylic polymer solution (A), 0.6 parts of a crosslinking agent mainly composed of an isocyanate group-containing compound (Coronate L (trade name) manufactured by Nippon Polyurethane Industry Co., Ltd.) and 0.075 parts of y-glycidoxypropyltrimethoxysilane (KMB-403 (trade name) manufactured by Shin-Etsu Chemical Co., Ltd.) as a silane coupling agent were added in this order to the acrylic polymer solution (A) so that a pressure-sensitive adhesive solution was prepared.

### (Preparation of Adhesive Optical Film)

The pressure-sensitive adhesive solution was uniformly applied with a fountain coater to the surface of a separator made of a polyethylene terephthalate film whose surface had been treated with a silicone release agent The coating was dried in an air circulation type thermostatic oven at 155°C for 3 minutes so that a 25 µm-thick pressure-sensitive adhesive layer was formed on the surface of the separator. The pressure-sensitive adhesive layer-carrying separator was transferred and attached to one side of the polarizing plate (the cyclic olefin resin film side) to form a pressure-sensitive adhesive polarizing plate.

### Example 2 and Comparative Examples 1 and 2

Pressure-sensitive adhesive solutions were prepared in the same manner as in Example 1, except that the amount of the crosslinking agent mainly composed of an isocyanate group-containing compound was changed as shown in Table 1. Pressure-sensitive adhesive polarizing plates were also prepared in the same manner as in Example 1.

### Comparative Example 3

An acrylic polymer solution (A') with an adjusted solids content of 30% was obtained in the same manner as in Example 1, except that the amount of acrylic acid was changed from 5 parts to 8 parts.

Based on 100 parts of the solids of the acrylic polymer solution (A'), 0.8 parts of a crosslinking agent mainly composed of an isocyanate group-containing compound (Coronate L (trade name) manufactured by Nippon Polyurethane Industry Co., Ltd.) and 0.075 parts of γ-glycidoxypropyltrimethoxysilane (KMB-403 (trade name) manufactured by Shin-Etsu Chemical Co., Ltd.) as a silane coupling agent were added in this order to the acrylic polymer solution (A') so that a pressure-sensitive adhesive solution was prepared. A pressure-sensitive adhesive polarizing plate was prepared in the same manner as in Example 1, except that this pressure-sensitive adhesive solution was used instead.

### Example 3

### (Preparation of Pressure-Sensitive Adhesive)

To a reaction vessel equipped with a condenser tube, a nitrogen introducing tube, a thermometer, and a stirrer were added 99 parts of butyl acrylate, 1.0 parts of 4-hydroxybutyl acrylate, 0.3 parts of 2,2'-azobisisobutyronitrile, and ethyl acetate to form a solution. While nitrogen gas was blown into the solution, the solution was then allowed to react at 60°C for 4 hours under stirring to give a solution containing an acrylic polymer with a weight average molecular weight of 1,650,000. Ethyl acetate was then added to the acrylic polymer-containing solution so that an acrylic polymer solution (B) with an adjusted solids content of 30% was obtained.

Based on 100 parts of the solids of the acrylic polymer solution (B), 0.3 parts of a dibenzoyl peroxide-containing peroxide crosslinking agent (Nyper BO-Y (trade name) manufactured by NOF Corporation), 0.18 parts of trimethylolpropane-xylylene diisocyanate (Takenate D110N (trade name) manufactured by Mitsui Takeda Chemicals, Inc.), and 0.2 parts of an acetoacetyl group-containing silane coupling agent (A-100 (trade name) manufactured by Soken Chemical & Engineering Co., Ltd.) were added in this order to the acrylic polymer solution (B) so that a pressure-sensitive adhesive solution was prepared. A pressure-sensitive adhesive polarizing plate was also prepared similarly to Example 1.

### Examples 4 and 5 and Comparative Examples 4 and 5

Pressure-sensitive adhesive solutions were prepared in the same manner as in Example 3, except that the amount of the crosslinking agent mainly composed of an isocyanate group-containing compound and the amount of the peroxide crosslinking agent were changed as shown in Table 1. Pressure-sensitive adhesive polarizing plates were also prepared in the same manner as in Example 1.

### Example 6

### (Preparation of Pressure-Sensitive Adhesive)

To a reaction vessel equipped with a condenser tube, a nitrogen introducing tube, a thermometer, and a stirrer were added 100 parts of isooctyl acrylate, 0.075 parts of 6-hydroxyethyl acrylate, 0.3 parts of 2,2'-azobisisobutyronitrile, and ethyl acetate to form a solution. While nitrogen gas was blown into the solution, the solution was then allowed to react at 60°C for 4 hours under stirring to give a solution containing an acrylic polymer with a weight average molecular weight of 1,750,000. Ethyl acetate was then added to the acrylic polymer-containing solution so that an acrylic polymer solution (C) with an adjusted solids content of 30% was obtained.

Based on 100 parts of the solids of the acrylic polymer solution (C), 2.5 parts of a crosslinking agent mainly composed of an isocyanate group-containing compound (Coronate L (trade name) manufactured by Nippon Polyurethane Industry Co., Ltd.) and 0.01 parts of γ-glycidoxypropyltrimethoxysilane (KMB-403 (trade name) manufactured by Shin-Etsu Chemical Co., Ltd.) as a silane coupling agent were added in this order to the acrylic polymer solution (C) so that a pressure-sensitive adhesive solution was prepared. A pressure-sensitive adhesive polarizing plate was also prepared in the same manner as in Example 1.

### Examples 7 to 9 and Comparative Example 6

Pressure-sensitive adhesive solutions were prepared in the same manner as in Example 6, except that the amount of the crosslinking agent mainly composed of an isocyanate group-containing compound was changed as shown in Table 1. Pressure-sensitive adhesive polarizing plates were prepared in the same manner as in Example 1.

The pressure-sensitive adhesive optical films (pressure-sensitive adhesive polarizing plates) obtained in the examples and the comparative examples were evaluated as described below. The results are shown in Table 1.

### <Equilibrium Moisture Content (%)>

The pressure-sensitive adhesive layer was cut into a 300 mm x 240 mm piece (about 1.5 g) which was folded into a block and then used as a sample for analysis. The sample was placed on an aluminum foil and weighed and then transferred to a sample board. The sample prepared by this method was placed in a heating oven, and its moisture content was measured. The measurement conditions were as follows: a nitrogen flow rate of 300 ml/ minute from a cylinder, a nitrogen flow rate of 200 ml/minute set in the equipment, and a temperature of 110°C in the heating oven. The measurement was continued until the measured value reached the drift value+0.1 µg/s, and the total amount of moisture was measured. The equilibrium moisture content ratio (%) was calculated according to the formula: equilibrium moisture content ratio (%)={(the total amount of moisture) / (the weight of the pressure-sensitive adhesive layer)}x100 (Karl-Fischer moisture meter).

### <Creep Test (Displacement Amount (µm))>

The 25 µn-thick pressure-sensitive adhesive layer was cut into a 10 mm (width) x 30 mm sample. An upper part (10 mm x 10 mm) of the sample was attached to a baking plate, autoclaved at 50°C and 50 atm for 15 minutes, and then allowed to stand at room temperature (23°C) for 1 hour. A load of 500 g was then applied to the sample (tensile shearing stress was applied in the vertical direction), and 1 hour later, the amount (µm) of displacement of the sample was measured.

### <Foaming Test>

The pressure-sensitive adhesive optical films (15 inch samples) were bonded to both sides of a 0.07 mm-thick non-alkali glass plate in the cross Nicol configuration. The samples were then autoclaved at 50°C and 5 atm for 15 minutes to be completely bonded. After the samples were stored at 80°C for 500 hours, foaming was observed and evaluated based on the criteria below. In the observation of foaming, the number of bubbles in the four corner areas (50 mm x 50 mm) of the 15 inch sample was measured with a polarizing microscope.
○: non-foaming
Δ: less than 100 bubbles
x: 100 or more bubbles

**[Table 1]**

| | Pressure-Sensitive Adhesive | | | Physical Properties of Pressure-Sensitive Adhesive Layer | | Foaming | |
|---|---|---|---|---|---|---|---|
| | Acrylic Polymer Type | Crosslinking Agent (parts by weight) | | Equilibrium Moisture Content ratio (%) | Creep Properties (Displacement Amount (µm)) | Evaluation | Number of Bubbles |
| | | Isocyanate Type | Peroxide Type | | | | |
| Example 1 | A | 0.6 | - | 0.42 | 62 | Δ | 3 |
| Example 2 | A | 0.25 | - | 0.39 | 98 | Δ | 61 |
| Comparative Example 1 | A | 0.05 | - | 0.41 | 153 | × | 1581 |
| Comparative Example 2 | A | 0.01 | - | 0.43 | 285 | × | 2157 |
| Comparative Example 3 | A' | 0.8 | - | 0.65 | 65 | × | 384 |
| Example 3 | B | 0.18 | 0.3 | 0.21 | 74 | ○ | 0 |
| Example 4 | B | 0.1 | 0.3 | 0.19 | 121 | Δ | 8 |
| Example 5 | B | 0.02 | 0.3 | 0.20 | 230 | Δ | 38 |
| Comparative Example 4 | B | 0.02 | 0.15 | 0.20 | 400 | x | 241 |
| Comparative Example 5 | B | 0.02 | 0.1 | 0.21 | 545 | x | 345 |
| Example 6 | C | 2.5 | - | 0.10 | 63 | ○ | 0 |
| Example 7 | C | 0.3 | - | 0.08 | 137 | ○ | 0 |
| Example 8 | C | 0.15 | - | 0.11 | 298 | Δ | 15 |
| Example 9 | C | 0.1 | - | 0.09 | 539 | Δ | 37 |
| Comparative Example 6 | C | 0.05 | - | 0.09 | 680 | × | 347 |

The results are also shown in Fig. 1. In Fig. 1, the result of each example is plotted with the symbol for the evaluation in the foaming test

## Claims

1. A pressure-sensitive adhesive optical film, comprising:
an optical film; and
a pressure-sensitive adhesive layer placed on at least one side of the optical film, **characterized in that**
the pressure-sensitive adhesive layer has an equilibrium moisture content ratio (a) of 0.5% by weight or less,
the pressure-sensitive adhesive layer shows a displacement amount (b) of 600 µm or less in one hour at 23°C, when a tensile shearing stress of 500 gf is applied to an adhesion area of 10 mm x 10 mm having a thickness of 25 µm, and
the equilibrium moisture content ratio (a) and the displacement amount (b) satisfy the relation: b< 1036.4 x e-^{5-124a}.

2. The pressure-sensitive adhesive optical film according to claim 1,
wherein the equilibrium moisture content ratio (a) is 0.02% by weight or more, and the displacement amount (b) is 20 µm or more.

3. The pressure-sensitive adhesive optical film according to claim 1,
wherein the pressure-sensitive adhesive layer has an equilibrium moisture content ratio (a) of 0.15% by weight or less and shows a displacement amount (b) of 600 µm or less.

4. The pressure-sensitive adhesive optical film according to claim 1,
wherein the pressure-sensitive adhesive layer has an equilibrium moisture content ratio (a) of more than 0.15% by weight to 0.25% by weight and shows a displacement amount (b) of 350 µm or less.

5. The pressure-sensitive adhesive optical film according to claim 1,
wherein the pressure-sensitive adhesive layer has an equilibrium moisture content ratio (a) of more than 0.25% by weight to 0.5% by weight and shows a displacement amount (b) of 150 µm or less.

6. The pressure-sensitive adhesive optical film according to claim 1,
wherein the pressure-sensitive adhesive layer has an equilibrium moisture content ratio (a) of from 0.05% by weight to 0.25% by weight, and the equilibrium moisture content ratio (a) and the displacement amount (b) satisfy the relation: b≤-541.67a+209.58.

7. The pressure-sensitive adhesive optical film according to claim 1,
wherein the optical film on which the pressure-sensitive adhesive layer is placed has a water-vapor permeability of 1000 g/m² per 24 hours or less at 80°C and 90%R.H.

8. The pressure-sensitive adhesive optical film according to claim 1,
wherein the optical film is a polarizing plate comprising a polarizer and a transparent protective film placed on at least one side of the polarizer.

9. The pressure-sensitive adhesive optical film according to claim 8,
wherein the transparent protective film placed on at least one side has a water-vapor permeability of 1000 g/m² per 24 hours or less at 80°C and 90%R.H., and the pressure-sensitive adhesive layer is placed on the transparent protective film.

10. The pressure-sensitive adhesive optical film according to claim 1,
wherein the pressure-sensitive adhesive layer is formed from a pressure-sensitive adhesive comprising an acrylic polymer and a crosslinking agent

11. An image display device, **characterized in that** comprising at least one piece of the pressure-sensitive adhesive optical film according to any one of claims 1 to 10.

## Patentansprüche

1. Optischer Haftklebefilm, umfassend:
einen optischen Film; und
eine Haftklebeschicht, die auf wenigstens einer Seite des optischen Films aufgebracht ist, **dadurch gekennzeichnet, dass**
die Haftklebeschicht ein Gleichgewichts-Feuchtigkeitsgehalt-Verhältnis (a) von 0,5 Gew.-% oder weniger aufweist,
die Haftklebeschicht einen Verschiebungswert (b) von 600 µm oder weniger in einer Stunde bei 23 °C aufweist, wenn eine Zugscherbelastung von 500 gf auf eine Klebefläche von 10 mm x 10 mm mit einer Dicke von 25 µm angewandt wird, und
das Gleichgewichts-Feuchtigkeitsgehalt-Verhältnis (a) und der Verschiebungswert (b) die Relation: b < 1036,4 x e^{-5,124a} erfüllen.

2. Optischer Haftklebefilm nach Anspruch 1, wobei das Gleichgewichts-Feuchtigkeitsgehalt-Verhältnis (a) 0,02 Gew.-% oder mehr beträgt und der Verschiebungswert (b) 20 µm oder mehr beträgt.

3. Optischer Haftklebefilm nach Anspruch 1, wobei die Haftklebeschicht ein Gleichgewichts-Feuchtigkeitsgehalt-Verhältnis (a) von 0,15 Gew.-% oder weniger aufweist und einen Verschiebungswert (b) von 600 µm oder weniger aufweist.

4. Optischer Haftklebefilm nach Anspruch 1, wobei die Haftklebeschicht ein Gleichgewichts-Feuchtigkeitsgehalt-Verhältnis (a) von mehr als 0,15 Gew.-% bis 0,25 Gew.-% aufweist und einen Verschiebungswert (b) von 350 µm oder weniger aufweist.

5. Optischer Haftklebefilm nach Anspruch 1, wobei die Haftklebeschicht ein Gleichgewichts-Feuchtigkeitsgehalt-Verhältnis (a) von mehr als 0,25 Gew.-% bis 0,5 Gew.-% aufweist und einen Verschiebungswert (b) von 150 µm oder weniger aufweist.

6. Optischer Haftklebefilm nach Anspruch 1, wobei die Haftklebeschicht ein Gleichgewichts-Feuchtigkeitsgehalt-Verhältnis (a) von 0,05 Gew.-% bis 0,25 Gew.-% aufweist und das Gleichgewichts-Feuchtigkeitsgehalt-Verhältnis (a) und der Verschiebungswert (b) die Relation: b ≤ -541,67a + 209,58 erfüllen.

7. Optischer Haftklebefilm nach Anspruch 1, wobei der optische Film, auf den die Haftklebeschicht aufgebracht ist, eine Wasserdampfdurchlässigkeit von 1000 g/m² pro 24 Stunden oder weniger bei 80 °C und 90 % relativer Feuchtigkeit aufweist.

8. Optischer Haftklebefilm nach Anspruch 1, wobei der optische Film eine Polarisationsplatte ist, die einen Polarisator und einen transparenten Schutzfilm, der auf wenigstens einer Seite des Polarisators aufgebracht ist, umfasst.

9. Optischer Haftklebefilm nach Anspruch 8, wobei der auf wenigstens einer Seite aufgebrachte transparente Schutzfilm eine Wasserdampfdurchlässigkeit von 1000 g/m² pro 24 Stunden oder weniger bei 80 °C und 90 % relativer Feuchtigkeit aufweist und die Haftklebeschicht auf dem transparenten Schutzfilm aufgebracht ist.

10. Optischer Haftklebefilm nach Anspruch 1, wobei die Haftklebeschicht aus einem Haftklebstoff gebildet ist, der ein Acrylpolymer und ein Vernetzungsmittel umfasst.

11. Bildanzeigevorrichtung, **dadurch gekennzeichnet, dass** sie wenigstens ein Stück des optischen Haftklebefilms nach einem der Ansprüche 1 bis 10 umfasst.

## Revendications

1. Film optique adhésif sensible à la pression, comprenant :
un film optique ; et
une couche adhésive sensible à la pression placée sur au moins un côté du film optique, **caractérisé en ce que**
la couche adhésive sensible à la pression a un rapport de taux d'humidité d'équilibre (a) de 0,5 % en poids ou moins,
la couche adhésive sensible à la pression présente une quantité de déplacement (b) de 600 µm ou moins en une heure à 23 °C, lorsqu'une contrainte de cisaillement par traction de 500 gf est appliquée à une surface d'adhérence de 10 mm x 10 mm ayant une épaisseur de 25 µm, et
le rapport de taux d'humidité d'équilibre (a) et la quantité de déplacement (b) satisfont la relation : b < 1036, 4 × e^{-5,124a}.

2. Film optique adhésif sensible à la pression selon la revendication 1, dans lequel le rapport de taux d_{'}humidité d'équilibre (a) est de 0,02 % en poids ou plus, et la quantité de déplacement (b) est de 20 µm ou plus.

3. Film optique adhésif sensible à la pression selon la revendication 1, dans lequel la couche adhésive sensible à la pression a un rapport de taux d'humidité d'équilibre (a) de 0,15 % en poids ou moins et présente une quantité de déplacement (b) de 600 µm ou moins.

4. Film optique adhésif sensible à la pression selon la revendication 1, dans lequel la couche adhésive sensible à la pression a un rapport de taux d'humidité d'équilibre (a) supérieur à 0,15 % en poids jusqu'à 0,25 % en poids et présente une quantité de déplacement (b) de 350 µm ou moins.

5. Film optique adhésif sensible à la pression selon la revendication 1, dans lequel la couche adhésive sensible à la pression a un rapport de taux d'humidité d'équilibre (a) supérieur à 0,25 % en poids jusqu'à 0,5 % en poids et présente une quantité de déplacement (b) de 150 µm ou moins.

6. Film optique adhésif sensible à la pression selon la revendication 1, dans lequel la couche adhésive sensible à la pression a un rapport de taux d'humidité d'équilibre (a) de 0,05 % en poids à 0,25 % en poids, et le rapport de taux d'humidité d'équilibre (a) et la quantité de déplacement (b) satisfont la relation : b ≤ - 541,67a + 209.58.

7. Film optique adhésif sensible à la pression selon la revendication 1, dans lequel le film optique sur lequel la couche adhésive sensible à la pression est placée a une perméabilité à la vapeur d'eau de 1 000 g/m² par 24 heures ou moins à 80 °C et 90 % d'humidité relative (R.H.).

8. Film optique adhésif sensible à la pression selon la revendication 1, dans lequel le film optique est une plaque polarisante comprenant un polariseur et un film protecteur transparent placé sur au moins un côté du polariseur.

9. Film optique adhésif sensible à la pression selon la revendication 8, dans lequel le film protecteur transparent placé sur au moins un côté a une perméabilité à la vapeur d'eau de 1 000 g/m² par 24 heures ou moins à 80 °C et 90 % d'humidité relative (R.H.), et la couche adhésive sensible à la pression est placée sur le film protecteur transparent.

10. Film optique adhésif sensible à la pression selon la revendication 1, dans lequel la couche adhésive
sensible à la pression est formée à partir d'un adhésif sensible à la pression comprenant un polymère acrylique et un agent de réticulation.

11. Dispositif d'affichage d'image, **caractérisé en ce qu'**il comprend au moins un morceau du film optique adhésif sensible à la pression selon l'une quelconque des revendications 1 à 10.
